# EUROPÄISCHE PATENTSCHRIFT

(11) **EP 1 243 226 B1**
(45) Veröffentlichungstag und Bekanntmachung des Hinweises auf die Patenterteilung: **30.11.2005**
(21) Anmeldenummer: 02005337.7
(22) Anmeldetag: 14.03.2002
(51) Int. Cl.: A61C 3/025, A61C 1/00, B24C 7/00

(54) **Pulverbehälter für ein dentales Abrasivstrahlgerät**
Powder container for a dental abrasive blasting device
Conteneur de poudre pour un appareil dentaire à jet abrasif

(30) Priorität: 23.03.2001 DE 10114325
(43) Veröffentlichungstag der Anmeldung: 25.09.2002
(73) Patentinhaber: Ferton Holding SA, 2800 Delémont (CH)
(72) Erfinder: Cevey, Julien, 1299 Crans-Près-Céligny (CH); Beerstecher, Lutz, 1277 Borex (CH)
(74) Vertreter: Müller, Frank Peter

(56) Entgegenhaltungen:
- DE-A- 3 212 207
- DE-U- 29 508 873
- US-A- 6 083 001
- US-B1- 6 179 614

## Beschreibung

Die Erfindung bezieht sich auf einen Pulverbehälter für ein dentales Abrasivstrahlgerät, bei dem ein in dem Behälter bevorratetes Dentalpulver gemeinsam mit einem gasförmigen Trägermedium an eine Düsenanordnung eines über eine Anschlußleitung angeschlossenen Handstückes angeliefert wird.

Bei einem aus der US-PS 1 664 369 bekannten Pulverbehälter der vorgenannten Art wird eine dosierte Beimischung eines Dentalpulvers zu einem gasförmigen Trägermedium mit einer motorisch angetriebenen Förderschnecke erhalten. Die Förderschnecke ist einer unterhalb einer Auslaßöffnung des Pulverbehälters angeordneten zylinderförmigen Mischkammer angeordnet und übernimmt mit ihrem einen Ende das aus dem Pulverbehälter zugeführte Pulver für eine Förderung hin zu einem Auslaßende der Mischkammer. An dem Förderende der Förderschnecke wird kurz vorher Luft in die Mischkammer zugeleitet, sodaß ein Luft-Pulver-Gemisch an die Düsenanordnung eines über eine Anschlußleitung angeschlossenen Handstückes des Dentalgerätes überführt wird.

Aus der US-PS 2 696 049 ist für dosierte Beimischung eines Dentalpulvers zu einem gasförmigen Trägermedium eine Siebplatte vorgesehen, die eine Mischkammer abdeckt und die mit ihrer Oberseite eine Auslaßöffnung im Boden eines Pulverbehälters verschließt. An der Unterseite ist die Siebplatte einem durch die Mischkammer hindurchgeleiteten inerten Gasstrom ausgesetzt. Durch den Gasstrom wird das Pulver über die Sieblöcher der Siebplatte angesaugt. Zur Unterstützung dieser Ansaugung sowie auch zur Vermeidung einer Verstopfung der Siebplatte ist der Pulverbehälter noch auf einer elektromagnetisch angetriebenen Rüttelplatte angeordnet, welche den Pulverbehälter in horizontale und vertikale Schwingungen versetzt. Diese Schwingungen unterstützen auch eine Bewegung des in dem Behälter bevorrateten Pulvers hin zu der Siebplatte.

Aus der DE 32 12 207 ist ein Pulverbehälter mit den Merkmalen gemäß dem Oberbegriff des Patentanspruches 1 bekannt, bei welchem eine vergleichbare elektromagnetische Vibrationseinrichtung vorgesehen ist. Die Auslaßöffnung des Pulverbehälters ist dabei mit einer randseitig eingespannten Membrane verschlossen, die in ihre noch mit einer Druckfeder unterstütze Schließstelllung durch einen für die Mischkammer geregelten pneumatischen Druckausgleich vorgespannt wird. Die Mischkammer ist dafür durch die Membrane gegen eine Druckausgleichskammer abgetrennt und wird gegen die Vorspannkraft der Druckfeder in eine bleibende Öffnungsstellung gebracht, sobald über eine Nebenleitung einer an der Oberseite der Membrane vorbeigeführten Durchlaßleitung für Druckluft eine geregelte Druckentlastung der Druckausgleichskammer über ein druckloses Auslaßventil vorgenommen ist. Die Vibrationseinrichtung ist unterhalb der Mischkammer angeordnet und wird eingeschaltet, sobald die Membrane in ihre Öffnungsstellung bzgl. der Auslaßöffnung des Pulverbehälters gebracht ist. Durch die eingeschaltete Vibrationseinrichtung wird der Austritt des Pulvers aus dem Vorratsbehälter in die Mischkammer unterstützt. In der Mischkammer wird eine mit konstruktiven Maßnahmen erreichte Wirbelausbildung unterhalten, um die Vermischung des durch die Mischkammer hindurchgeleiteten Druckluftstromes mit dem Pulver zu begünstigen. Eine dosierte Beimischung des Pulvers zu der Druckluft bleibt dabei jedoch völlig unberücksichtigt.

Der Erfindung liegt die Aufgabe zugrunde, einen Pulverbehälter der durch den Oberbegriff des Patentanspruches 1 angegebenen Art bereitzustellen, bei welchem ohne die Verwendung einer zusätzlichen Vibrationseinrichtung eine dosierte Beimischung des Dentalpulvers zu einem durch die Mischkammer hindurchgeleiteten Druckluftstrom mit vergleichbar einfacheren Maßnahmen erreicht werden kann, wobei die dosierte Beimischung gleichzeitig präziser und im Einzelfall auch variierbar sein soll, um für eine mit dem Dentalpulver durchgeführte Zahnbehandlung optimalere Voraussetzungen zu schaffen.

Diese Aufgabe wird erfindungsgemäß mit einem Pulverbehälter gelöst, der mit den Merkmalen gemäß dem Patentanspruch 1 ausgebildet ist.

Bei dem erfindungsgemäßen Pulverbehälter wird somit durch einen getakteten Antrieb für den Schließkörper des Auslaßventils eine Bewegungskomponente erhalten, welche direkt an die in dem Behälter bevorratete Pulvermenge übertragen wird. Dadurch wird eine ständige Lockerung des Pulvers oberhalb der Auslaßöffnung des Behälters erreicht. Durch diese gelockerte Konsistenz des Pulvers wird gleichzeitig eine präzisere Dosierung für die in die Mischkammer austretenden Pulverteilchen erzielt, wobei die Dosierung mit der vorgegebenen Taktfolge erreicht wird, die den Schließkörper des Auslaßventils ständig zwischen einer Öffnungsstellung und einer Schließstellung bewegen läßt. Die Dosierung der Pulverteilchen für eine Beimischung zu dem durch die Mischkammer hindurchgeleiteten Luftstrom kann daher auch mit einer Veränderung der Taktfolge geändert werden, wenn eine Anpassung an veränderte Strömungsraten des Luftstromes bzw. auch an gewünschte unterschiedliche Austrittsgeschwindigkeiten des an der Düsenanordnung des Handstückes für eine Zahnbehandlung austretenden Arbeitsstrahles angezeigt erscheint.

Weitere vorteilhafte und zweckmäßige Ausbildungen des erfindungsgemäßen Pulverbehälters sind in den einzelnen Patentansprüchen angegeben.

Ein Ausführungsbeispiel des erfindungsgemäßen Pulverbehälters ist in der Zeichnung schematisch dargestellt und wird nachfolgend näher beschrieben. Es zeigt
- Fig. 1: eine Schemadarstellung für ein dentales Abrasivstrahlgerät, bei welchem ein erfindungsgemäßer Pulverbehälter vorgesehen ist,
- Fig. 2: eine Schnittdarstellung des Pulverbehälters gemäß einer ersten Ausführungsform für ein Auslaßventil, dessen Schließkörper für eine getaktete Bewegung mit einer elektromagnetisch ausgebildeten Antriebseinrichtung verbunden ist,
- Fig. 3: eine Perspektivansicht des als eine Anbaueinheit gemeinsam mit der elektromagnetischen Antriebseinrichtung ausgebildeten Auslaßventils der Ausführungsform gemäß Fig. 2,
- Fig. 4: eine Schnittdarstellung des Pulverbehälters für eine zweite Ausführungsform des Auslaßventils, bei dem wie bei der Ausführungsform gemäß Fig. 2 ein elektromagnetischer Antrieb für den Schließkörper vorgesehen ist,
- Fig. 5: eine Schnittdarstellung des Pulverbehälters für eine dritte Ausführungsform des Auslaßventils, bei dem ein pneumatischer Antrieb für eine getaktete Bewegung des Schließkörpers vorgesehen ist, und
- Fig. 6: eine Schnittdarstellung des Pulverbehälters für eine vierte Ausführungsform des Auslaßventils, bei dem wie bei der Ausführungsform gemäß Fig. 5 ein pneumatischer Antrieb für eine getaktete Bewegung des Schließkörpers vorgesehen ist.

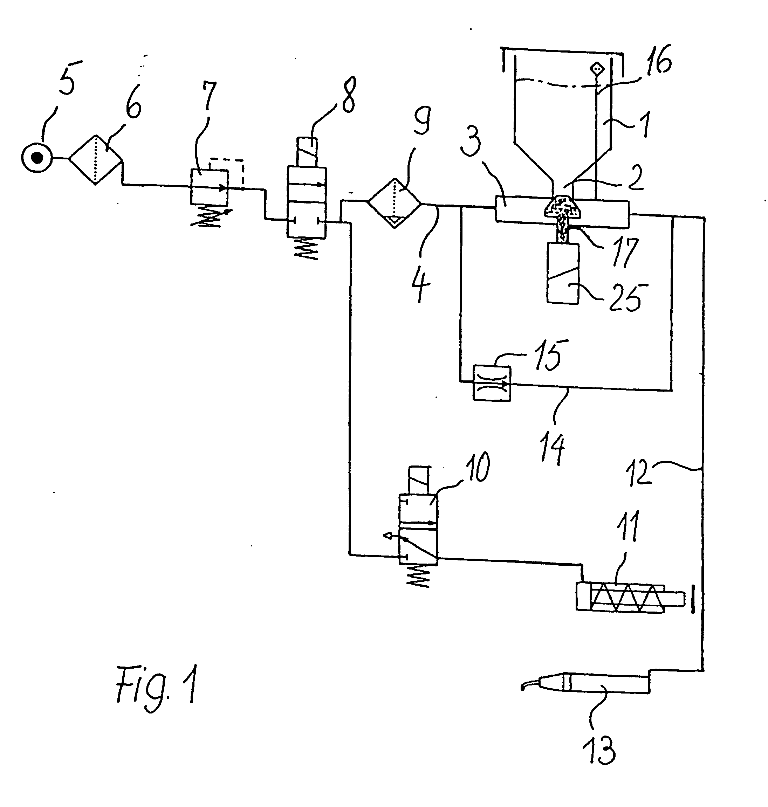

Für die Schemadarstellung der Fig. 1 ist ein Abrasivstrahlgerät berücksichtigt, das prinzipiell eine gleiche Ausbildung aufweisen kann wie das Gerät gemäß der EP-A-0 097 288 B1. Diese Druckschrift kann daher zur Ergänzung der Beschreibung des Ausführungsbeispieles der vorliegenden Erfindung berücksichtigt werden.

Für eine mit einem solchen Abrasivstrahlgerät durchgeführte Zahnbehandlung wird das Dentalpulver in einem Pulverbehälter 1 bevorratet. Das Pulver wird über eine bodenseitige Auslaßöffnung 2 des Behälters in eine Mischkammer 3 überführt, in welcher es einem Luftstrom beigemischt wird, der über eine angeschlossene Druckluftzuleitung 4 in die Mischkammer zugleitet wird. Die Druckluftzuleitung 4 ist mit einem Druckluftanschluß 5 verbunden. In der Druckluftzuleitung sind hintereinander ein Luftfilter 6, ein Druckregler 7, ein Wegeventil 8 und ein weiterer Luftfilter 9 angeordnet. Durch das Wegeventil 8 ist ein Anschluß an ein weiteres Wegeventil 10 steuerbar, mit welchem ein Quetschventil 11 pneumatisch betätigt werden kann. Mit dem Quetschventil 11 kann die Zuleitung des in der Mischkammer 3 erhaltenen Luft-Pulver-Gemisches über einer Anschlußleitung 12 an ein Handstück 13 unterbrochen werden. Zu der Anschlußleitung 12 ist noch eine weitere Nebenleitung 14 der Druckluftzuleitung 4 geführt, in welcher eine Strömungsdüse 15 angeordnet ist. Eine andere Nebenleitung 16 ist zu dem Pulverbehälter 1 geführt und mündet dort oberhalb des höchsten Niveaus des bevorrateten Pulvers.

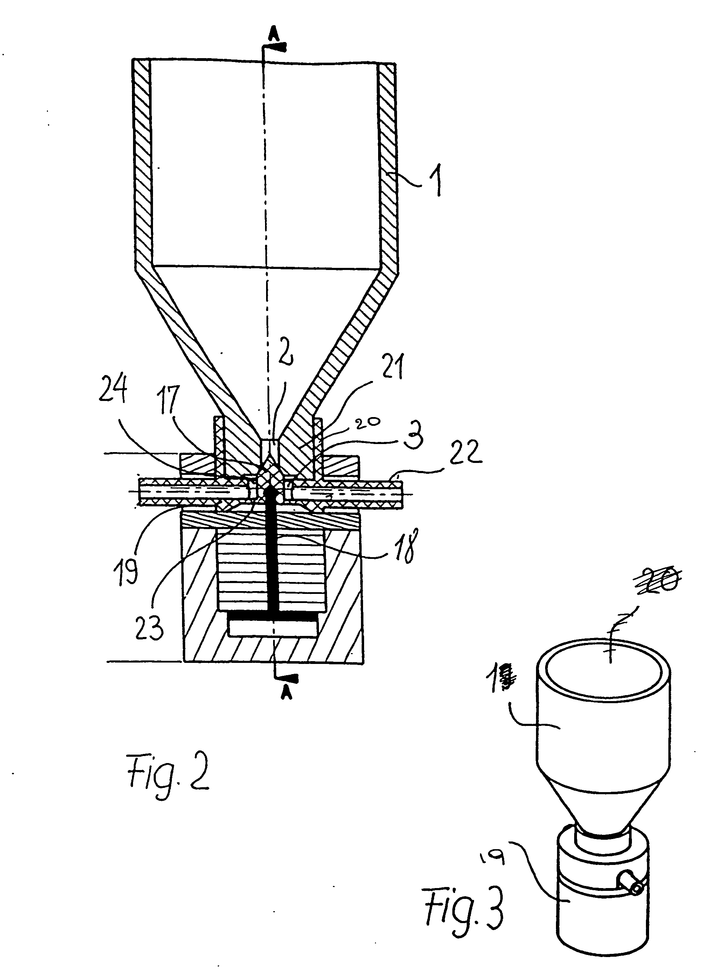

Für den Austritt des Pulvers aus dem Pulverbehälter 1 und dessen dosierte Beimischung zu dem durch die Mischkammer 3 hindurchgeleiteten Luftstrom ist ein Auslaßventil vorgesehen. Ein Schließkörper 17 des Auslaßventils ist in der Ausführungsform gemäß Fig. 2 als ein im wesentlichen nadelförmiges Verschlußteil ausgebildet. Das Verschlußteil kann aus einer in Fig. 2 festgehaltenen Schließstellung in eine die Auslaßöffnung 2 des Behälters freigebende Öffnungsstellung durch einen damit verbundenen Hubmagneten 18 einer elektromagnetischen Antriebseinrichtung bewegt werden. Mit der elektromagnetischen Antriebseinrichtung wird für das Verschlußteil, also den Schließkörper 17 des Auslaßventils, eine getaktete Bewegung zwischen einer Schließstellung und einer Öffnungsstellung gesteuert. Als Folge dieser getakteten Bewegung kann eine sehr präzise Dosierung für die Beimischung des Pulvers erhalten werden. Die Dosierung kann dabei mit einer Veränderung der Taktfolge bzw. der Taktfrequenz verändert werden. Als Taktfrequenz sind Werte zwischen etwa 0.5 und 100 Hz bei einer Pulsweite zwischen 0 und 100 % denkbar. Die Dosierung kann auch mit einer Veränderung des Hubes des Hubmagneten 18 und einer angepaßten Ausbildung der Nadelform des Schließkörpers 17 in Abstimmung mit dem Austrittsquerschnitt der Ausβlaßöffnung 2 des Pulverbehälters optimiert werden. Die Nadelform des Schließkörpers 17 ergibt eine mehr oder weniger große Veränderung des Austrittsquerschnitts in Abhängigkeit davon, wie weit die Nadel in die Auslaßöffnung 2 vorgeschoben wird.

Bei der Ausführungsform in Fig. 2 bildet das nadelförmige Verschlußteil des Auslaßventils ein einstückig verbundenes Formteil eines aus einem gummielastischen Material bestehenden Ventilkörpers 19, der mit einem topfförmigen Hauptraum 20 auf einen Ansatz 21 am Auslaß des Pulverbehälters 1 aufsteckbar ist. Die Mischkammer 3 ist bei diesem Ventilkörper 19 mit einem Nebenraum ausgebildet, der von einer Durchlaßleitung 22 für den Luftstrom durchquert ist. An diese Durchlaßleitung 22 ist stromaufwärts von der Mischkammer 3 die Druckluftzuleitung 4 und stromabwärts von der Mischkammer 3 die weiterführende Anschlußleitung 12 an das Handstück 13 angeschlossen. Die Durchlaßleitung 22 ist mit einem hinterschnittenen Wandbereich 23 ausgebildet, an welchen das nadelförmige Verschlußteil angeformt ist und über eine Durchtrittsöffnung 24 in den topfförmigen Hauptraum 20 vorsteht, wobei dafür eine mit der Auslaßöffnung 2 des Pulverbehälters 1 fluchtende Anordnung eingehalten wird.

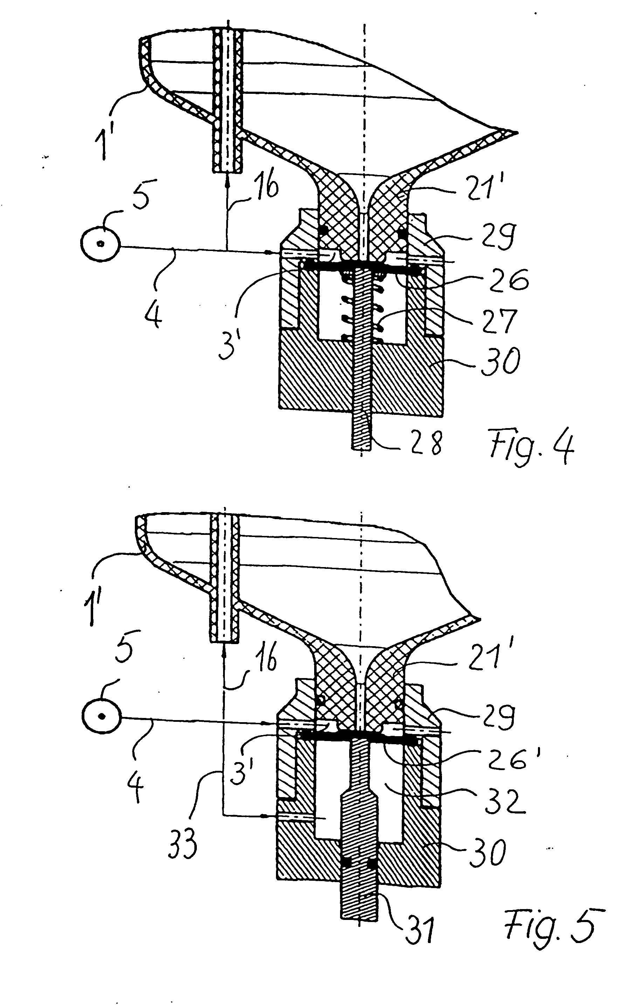

Gemäß der Darstellung in Fig. 3 ist der Ventilkörper 19 bevorzugt als eine mit der elektromagnetischen Antriebseinrichtung 25 für den Hubmagneten 18 gemeinsame Anbaueinheit ausgebildet. Durch die für den Ventilkörper 19 vorgesehene Aufsteckbarkeit auf den Ansatz 21 des Pulverbehälters 1 kann daher der Anschluß an die elektromagnetische Antriebseinrichtung 25 mit entsprechend einfachen Maßnahmen realisiert werden. Für den Fachmann ergeben sich zahlreiche Möglichkeiten, wie die getaktete Bewegung des Hubmagneten 18 und dessen Hub innerhalb der oben erwähnten Bereiche fallweise verändert werden kann, um die dosierte Beimischung des Pulvers aus dem Pulverbehälter 1 zu optimieren und gleichzeitig einen optimalen Pulveraustritt aus dem Pulverbehälter in die Mischkammer 3 zu erhalten.

In Fig. 4 ist für eine zweite Ausführungsform des Auslaßventils eine Ausbildung des Schließkörpers mit einer tellerförmigen Membrane 26 gezeigt. Die Membrane 26 ist durch eine Druckfeder 27 in ihre Schließstellung an der bodenseitigen Auslaßöffnung des Pulverbehälters 1 vorgespannt. Durch eine Verbindung mit einem Hubmagneten 28 einer elektromagnetischen Antriebseinrichtung kann die Membrane 26 abwechselnd zu einer Schließstellung in eine getaktete Öffnungsstellung überführt werden ähnlich dem nadelförmigen Verschlußteil bei der vorbeschriebenen Ausführungsform. Das Auslaßventil ist mit einer Anbaueinheit ausgebildet, die aus zwei miteinander verschraubten Teilstücken 29 und 30 besteht. Mit dem einen Teilstück 29, das wieder auf einen Ansatz 21' am Auslaß des Pulverbehälters 1 aufsteckbar ist, wird eine Mischkammer 3' ausgebildet. Der aus der angeschlossenen Druckluftzuleitung 4 in die Durchlaßleitung zugeleitete Luftstrom ist an der Oberseite der Membrane 26 vorbeigeführt , die zwischen den beiden Teilstücken 29 und 30 randseitig eingespannt ist.

Bei der Ausführungsform in Fig. 5 ist anstelle einer elektromagnetischen Antriebseinrichtung eine pneumatisch ausgebildete Antriebseinrichtung vorgesehen. Mit der Membrane 26' ist ein Druckkolben 31 verbunden. An der Unterseite der Membrane 26' ist eine Druckausgleichkammer 32 ausgebildet, zu welcher eine Nebenleitung 33 der Druckluftleitung 4 geführt ist. Im Zusammenwirken mit dem an der Oberseite der Membrane 26' vorbeigeführten Luftstrom wird daher bei dieser Ausführungsform des Auslaßventils ein pneumatischer Druckausgleich erhalten, mit welchem die Membrane 26' eine Vorspannung ihrer Schließstellung an dem bodenseitigen Auslaß des Pulverbehälters erfährt. Die Membrane könnte bei dieser Ausführungsform wie im übrigen auch bei de Ausführungsform gemäß Fig. 4 noch mit einem zusätzlichen nadelförmigen Verschlußteil versehen werden, welches dann in die Auslaßöffnung des Pulverbehälters vorstehen würde. Für eine angepaßte Ausbildung des pneumatischen Antriebs für die Membrane 26' in Übereinstimmung mit den oben zu dem elektromagnetischen Antrieb gemachten Angaben ergeben sich auch hier für den Fachmann wieder zahlreiche Möglichkeiten.

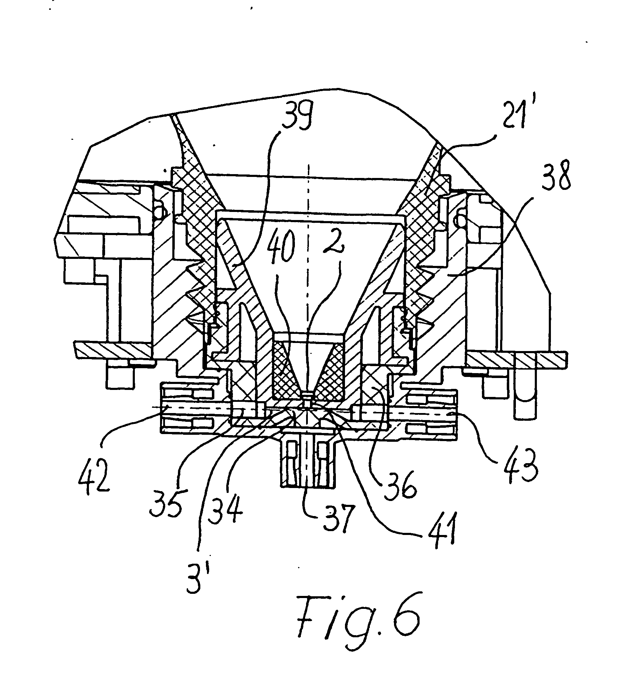

Bei der Ausführungsform in Fig. 6 ist ebenfalls ein pneumatischer Antrieb für den Schließkörper des Auslaßventils vorgesehen. Wie bei der Ausführungsform gemäß Fig. 2 ist auch hier ein hinterschnittener Wandbereich 34 einer Durchlaßleitung 35 für Druckluft eines gummielastischen Körpers 36 zur Ausbildung eines Schließkörpers des Auslaßventils vorgesehen. Der hinterschnittene Wandbereich ist dabei mit einer Wanddicke ausgeführt ist, die eine mit getakteten Druckimpulsen veranlaßte Bewegung dieses Wandbereichs vergleichbar mit der getakteten Bewegung der Membrane bei den Ausführungsformen gemäß den Fig. 4 und 5 sicherstellt. Die für diese Bewegung mit einer pneumatischen Antriebseinrichtung bereitgestellten Durckimpulse werden über eine Anschlußbohrung 37 eines mit einem Ansatz 21' des Pulverbehälters verschraubten Schraubteils 38 zugeleitet.

Durch das Schraubteil 38 wird der gummielastische Körper 36 über der mit einem Einsatzteil 39 und einer Gummibüchse 40 ausgebildeten Auslaßöffnung 2 des Pulverbehälters so festgelegt, daß mit dem hinterschnittenen Wandbereich 34 eine mit der Auslaßöffnung 2 fluchtende Durchtrittsöffnung 41 im Boden des Einsatzteils 39 verschlossen werden kann. An dem Schraubteil 38 ist auch der Anschluß 42 für die Druckluftzuleitung vorgesehen, um eine Verbindung mit der Durchlaßleitung 35 zu erhalten. Die Durchlaßleitung 35 erweitert sich zu einer Mischkammer 31, in welcher in der getakteten Öffnungsstellung des mit dem hinterschnittenen Wandbereich 34 ausgebildeten Schließkörpers des Auslaßventils eine dosierte Beimischung der Pulverteilchen stattfindet, die über die Auslaßöffnung 2 aus dem Pulverbehälter austreten. Das in der Mischkammer 31 gebildete Luft-Pulver-Gemisch wird über einen Anschluß 43 des Schraubteils 38 an die angeschlossene Anschlußleitung eines für eine Zahnbehandlung verwendeten Handstückes überführt.

## Patentansprüche

1. Pulverbehälter für ein dentales Abrasivstrahlgerät, bei dem ein in dem Behälter (1, 1') bevorratetes Dentalpulver gemeinsam mit einem gasförmigen Trägermedium an eine Düsenanordnung eines über eine Anschlußleitung (12) angeschlossenen Handstückes (13) angeliefert wird, wobei in einer von dem gasförmigen Trägermedium durchströmten Mischkammer (3, 3'), die an einer mit einem Auslaßventil versehenen Auslaßöffnung (2) des Pulverbehälters (1) angeordnet ist, eine dosierte Beimischung des Pulvers vornehmbar ist und wobei ein Schließkörper (17, 26, 26', 34) des Auslaßventils in eine die Beimischung des Pulvers innerhalb der Mischkammer verhindernde Schließstellung vorgespannt ist und durch eine mit ihm antriebsmäßig verbundene Antriebseinrichtung (18, 25; 28; 31, 32, 33; 37) in eine Öffnungsstellung abwechselnd zu seiner Schließstellung überführt werden kann,
**dadurch gekennzeichnet,**
**daß** der Schließkörper (17, 26, 26', 34) während der Zuführung des gasförmigen Trägermediums in die Mischkammer (3, 3') in eine getaktete Öffnungsstellung abwechselnd zu seiner Schließstellung überführbar ist, so dass das Pulver innerhalb der Mischkammer (3, 3') dem an dem Schließkörper des Auslaßventils vorbeiströmenden gasförmigen Trägermedium derart beimischbar ist, dass mit der die Bewegung des Schließkörpers (17, 26, 26', 34) des Auslaßventils bestimmenden Taktfolge die beigemischte Dosiermenge des Pulvers bestimmbar ist.

2. Pulverbehälter nach Anpruch 1, **dadurch gekennzeichnet, daß** die Taktfolge des Antriebs für die Bewegung des Schließkörpers (17, 26, 26', 34) des Auslaßventils zwischen 0.5 und 100 Hz bei einer Pulsweite zwischen 0 und 100 % veränderbar ist.

3. Pulverbehälter nach Anspruch 1 oder 2, **dadurch gekennzeichnet, daß** der Schließkörper (17) des Auslaßventils als ein im wesentlichen nadelförmiges Verschlußteil für die Auslaßöffnung (2) des Pulverbehälters (1) ausgebildet ist, relativ zu welcher die Nadelspitze für die abwechselnde Einnahme der Schließstellung und der Öffnungsstellung des Schließkörpers bewegbar ist.

4. Pulverbehälter nach Anspruch 3, **dadurch gekennzeichnet, daß** das im wesentlichen nadelförmige Verschlußteil an einer für eine Druckübersetzung vorgesehenen Membrane (26, 26', 34) angeordnet ist.

5. Pulverbehälter nach Anspruch 1 oder 2, **dadurch gekennzeichnet, daß** der Schließkörper des Auslaßventils mit einer tellerförmgien Membrane (26, 26') ausgebildet ist.

6. Pulverbehälter nach einem der Ansprüche 1 bis 5, **dadurch gekennzeichnet**, der Schließkörper (17, 26) des Auslaßventils durch einen Hubmagnet (18, 28) einer elektromagnetischen Antriebseinrichtung (25) bewegbar ist.

7. Pulverbehälter nach einem der Ansprüche 1 bis 5, **dadurch gekennzeichnet, daß** der Schließkörper (26', 34) des Auslaßventils durch eine pneumatische Antriebseinrichtung (31, 32, 33, 37) bewegbar ist.

8. Pulverbehälter nach Anspruch 7, **dadurch gekennzeichnet, daß** der Schließkörper (26') des Auslaßventils durch einen pneumatisch betätigten Druckkolben (31) der pneumatischen Antriebseinrichtung (32, 33) bewegbar ist.

9. Pulverbehälter nach Anspruch 7, **dadurch gekennzeichnet, daß** der Schließkörper (34) des Auslaßventils durch getaktete Druckimpulse der pneumatischen Antriebseinrichtung (37) bewegbar ist.

10. Pulverbehälter nach einem der Ansprüche 1 bis 9, **dadurch gekennzeichnet, daß** die Mischkammer (3, 3') durch eine getrennt ausgeführte, an dem Pulverbehälter (1, 1') festlegbare Anbaueinheit (19; 29, 30; 36, 38, 39) gemeinsam für das Auslaßventil und dessen Antriebseinrichtung (25) ausgebildet ist.

11. Pulverbehälter nach Anspruch 10, **dadurch gekennzeichnet, daß** die Anbaueinheit (36, 38, 39) mit einem an der Auslaßöffnung (2) vorgesehenen Ansatz (21') des Pulverbehälters verschraubt ist.

12. Pulverbehälter nach einem der Ansprüche 1 bis 11, **dadurch gekennzeichnet, daß** der Schließkörper (26) des Auslaßventils durch eine Druckfeder (27) in die Schließstellung an der Auslaßöffnung (2) des Pulverbehälters (1') vorgespannt ist.

13. Pulverbehälter nach einem der Ansprüche 7 bis 12, **dadurch gekennzeichnet, daß** der Schließkörper (26') des Auslaßventils durch einen pneumatischen Druckausgleich in die Schließstellung an der Auslaßöffnung (2) des Pulverbehälters (1') vorgespannt ist, der mit einer Nebenleitung (33) des an einer Oberseite des Schließkörpers für die Beimischung des Pulvers vorbeiströmenden gasförmigen Trägermediums erhalten wird, wobei die Nebenleitung zu einer Druckausgleichskammer (32) geführt ist, die an einer gegenüberliegenden Unterseite des Schließkörpers mit einem abgetrennten Teilraum der Mischkammer (3') ausgebildet ist.

14. Pulverbehälter nach Anspruch 1 oder 2, **dadurch gekennzeichnet, daß** das Auslaßventil als ein gummielastischer Körper (19, 36) ausgebildet ist, der mit einem topfförmigen Hauptraum (20) auf einen Ansatz (21, 39) des Pulverbehälters (1) aufsteckbar ist und mit einem über eine Druchtrittsöffnung (24, 41) verbundenen Nebenraum die Mischkammer (3, 3') ergibt, wobei der Schließkörper des Auslaßventils mit einem hinterschnittenen Wandbereich (23, 34) der Durchlaßleitung (22, 35) für das gasförmige Trägermedium ausgebildet und in eine gegenüberliegende Schließstellung an der Auslaßöffnung (2) des Pulverbehälters vorgespannt ist.

15. Pulverbehälter nach Anspruch 14, **dadurch gekennzeichnet, daß** mit dem hinterschnittenen Wandbereich (23) der Durchlaßleitung (22) ein nadelförmiger Vorsprung einstückig ausgebildet ist, der als Schließkörper (17) des Auslaßventils über die gegenüberliegende Durchtrittsöffnung (24) in die Auslaßöffnung (2) des Pulverbehälters (1) vorsteht.

16. Pulverbehälter nach Anspruch 14, **dadurch gekennzeichnet, daß** mit dem hinterschnittenen Wandbereich (34) der Durchlaßleitung (35) eine als Schließkörper des Auslaßventils vorgesehene Membrane ausgebildet ist, die in eine gegenüberliegende Schließstellung an der mit der Auslaßöffnung (2) des Pulverbehälters fluchtenden Durchtrittsöffnung (41) vorgespannt wird.

17. Pulverbehälter nach einem der Ansprüche 13 bis 16, **dadurch gekennzeichnet, daß** der hinterschnittene Wandbereich (23, 34) der Durchlaßleitung (22, 35) mit einem über die Nebenleitung (33) vermittelten pneumatischen Druck beaufschlagt wird.

18. Pulverbehälter nach einem der Ansprüche 9 und 13 bis 17,
**dadurch gekennzeichnet,**
**daß** die getakteten Druckimpulse an den hinterschnittenen Wandbereich (34) der Durchlaßleitung (35) für das gasförmige Trägermedium vermittelt werden.

## Claims

1. Powder container for a dental abrasive blast tool, in which a dental powder stored in the container (1, 1') is supplied together with a gaseous carrier medium to a nozzle arrangement of a handset (13) connected via a connection line (12), wherein in a mixing chamber (3, 3') through which the gaseous carrier medium flows and which is disposed on an outlet aperture (2) of the powder container (1) provided with an outlet valve, metered mixing of the powder may be effected and wherein a closing body (17, 26, 26', 34) of the outlet valve is biased in a closed position preventing mixing of the powder inside the mixing chamber and can be moved via a drive mechanism (18, 25; 28; 31, 32, 33; 37) drivingly connected thereto into an open position alternately to its closed position, **characterised in that** the closing body (17, 26, 26', 34) may be moved alternately to its closed position into a timed open position during supply of the gaseous carrier medium into the mixing chamber (3, 3'), so that the powder inside the mixing chamber (3, 3') may be mixed with the gaseous carrier medium flowing past the closing body of the outlet valve in such a manner that with the cycle determining the movement of the closing body (17, 26, 26', 34) of the outlet valve the metered quantity of powder being mixed can be determined.

2. Powder container according to claim 1, **characterised in that** the cycle rate of the drive for moving the closing body (17, 26, 26', 34) of the outlet valve may be varied between 0.5 and 100 Hz with a pulse width of between 0 and 100 %.

3. Powder container according to claim 1 or 2, **characterised in that** the closing body (17) of the outlet valve is formed as a substantially needle-shaped sealing member for the outlet aperture (2) of the powder container (1), relative to which the needle tip is movable in order to adopt the closed position and the open position of the closing body alternately.

4. Powder container according to claim 3, **characterised in that** the substantially needle-shaped sealing member is disposed on a membrane (26, 26', 34) provided to intensify the pressure.

5. Powder container according to claim 1 or 2, **characterised in that** the closing body of the outlet valve is formed with a saucer-shaped membrane (26, 26').

6. Powder container according to one of claims 1 to 5, **characterised in that** the closing body (17, 26) of the outlet valve is movable by a lifting magnet (18, 28) of an electromagnetic drive mechanism (25).

7. Powder container according to one of claims 1 to 5, **characterised in that** the closing body (26', 34) of the outlet valve is movable by a pneumatic drive mechanism (31, 32, 33, 37).

8. Powder container according to claim 7, **characterised in that** the closing body (26') of the outlet valve is movable by a pneumatically actuated pressure piston (31) of the pneumatic drive mechanism (32, 33).

9. Powder container according to claim 7, **characterised in that** the closing body (34) of the outlet valve is movable by timed pressure pulses of the pneumatic drive mechanism (37).

10. Powder container according to one of claims 1 to 9, **characterised in that** the mixing chamber (3, 3') is formed by a separately realised attachment (19; 29, 30; 36, 38, 39) fixable to the powder container (1, 1') both for the outlet valve and its drive mechanism (25).

11. Powder container according to claim 10, **characterised in that** the attachment (36, 38, 39) is screwed to a projection (21') of the powder container provided on the outlet aperture (2).

12. Powder container according to one of claims 1 to 11, **characterised in that** the closing body (26) of the outlet valve is biased by a pressure spring (27) into the closed position against the outlet aperture (2) of the powder container (1').

13. Powder container according to one of claims 7 to 12, **characterised in that** the closing body (26') of the outlet valve is biased in the closed position against the outlet aperture (2) of the powder container (1') by pneumatic pressure equalisation, which pressure equalisation is achieved by a bypass (33) of the gaseous carrier medium flowing past an upper face of the closing body for mixing of the powder, the bypass leading to a pressure equalisation chamber (32), which is formed on an opposing underside of the closing body with a separate partial chamber of the mixing chamber (3').

14. Powder container according to claim 1 or 2, **characterised in that** the outlet valve is formed as a resilient body (19, 36) which may be mounted with a pot-shaped main chamber (20) on a projection (21, 39) of the powder container (1) and produces the mixing chamber (3, 3') with a subsidiary chamber connected via a through aperture (24, 41), the closing body of the outlet valve being formed with an undercut wall region (23 24) of the through line (22, 35) for the gaseous carrier medium and biased in an opposing closed position against the outlet aperture (2) of the powder container.

15. Powder container according to claim 14, **characterised in that** with the undercut wall region (23) of the through line (22), a needle-shaped projection is integrally formed, which projects as a closing body (17) of the outlet valve over the opposing through aperture (24) into the outlet aperture (2) of the powder container (1).

16. Powder container according to claim 14, **characterised in that** with the undercut wall region (34) of the through line (35) a membrane provided as a closing body of the outlet valve is formed, which is biased in an opposing closed position against the through aperture (41) flush with the outlet aperture (2) of the powder container.

17. Powder container according to one of claims 13 to 16, **characterised in that** the undercut wall region (23, 34) of the through line (22, 35) is acted on with pneumatic pressure supplied via a bypass (33).

18. Powder container according to one of claims 9 and 13 to 17, **characterised in that** the timed pressure pulses are transmitted to the undercut wall region (34) of the through line (35) for the gaseous carrier medium.

## Revendications

1. Conteneur à poudre pour un appareil dentaire à jet abrasif où une poudre dentaire emmagasinée dans ce réservoir (1, 1') se livre en même temps qu'un médium de base gazeux à un dispositif d'injecteurs d'une poignée (13) branchée par une conduite de raccord (12), une adjonction dosée de la poudre étant possible alors dans une chambre de mélange (3, 3') qui est traversée par le médium de base gazeux et qui est placée à une ouverture de sortie (2) pourvue d'une soupape de sortie au récipient à poudre (1), un fermoir (17, 26, 26', 34) de la soupape de sortie étant précontraint en position fermée empêchant l'adjonction de la poudre à l'intérieur de la chambre de mélange et pouvant se transposer en une position ouverte en alternance à sa position fermée par le biais d'un dispositif d'entraînement (18, 25; 28; 31, 32, 33; 37) relié à lui sur le plan entraînement,
**caractérisé par le fait**
**que** l'obturateur (17, 26, 26', 34) est transférable pendant l'amenée du médium de base gazeux à la chambre de mélange (3,3') en une position ouverte cadencée en alternance à sa position fermée de telle sorte que la poudre peut se mélanger à l'intérieur de la chambre de mélange (3, 3') au médium de base gazeux affluant au fermoir de la soupape de sortie de telle sorte que la quantité de dosage de poudre ajoutée peut se déterminer par la suite cadencée déterminant le mouvement de ce fermoir (17, 26, 26', 34) de la soupape de sortie.

2. Récipient à poudre d'après la prétention N° 1, **caractérisé par le fait que** la suite de cadences de l'entraînement peut se modifier pour le mouvement du fermoir (17, 26, 26', 34) de la soupape de sortie de 0,5 à 100 Hz pour une ampleur d'impulsions allant de 0 à 100%.

3. Récipient à poudre d'après les prétentions N^{os} 1 ou 2, **caractérisé par le fait que** le fermoir (17) de la soupape de sortie fait fonction de pièce d'obturation essentiellement en forme d'aiguille pour l'ouverture de sortie (2) du récipient à poudre (1), de manière relative où la pointe de l'aiguille peut bouger pour la prise en alternance de la position fermée et de la position ouverte du fermoir.

4. Récipient à poudre d'après la prétention N° 3, **caractérisé par le fait que** la pièce d'obturation essentiellement en forme d'aiguille est placée à une membrane (26, 26' 34) pour une transmission de pression.

5. Récipient à poudre d'après les prétentions N^{os} 1 ou 2, **caractérisé par le fait que** le fermoir de la soupape de sortie est constitué d'une membrane (26. 26') en forme d'assiette.

6. Récipient à poudre selon l'une des prétentions N^{os} 1 à 5, **caractérisé par le fait que** le fermoir (17, 26) de la soupape de sortie peut bouger par un aimant de levage (18;28) d'un dispositif électromagnétique d'entraînement (25).

7. Récipient à poudre selon l'une des prétentions 1 à 5, **caractérisé par le fait que** le fermoir (26', 34) de la soupape de sortie peut bouger par un aimant de levage pneumatique (31, 32, 33, 37).

8. Récipient à poudre d'après la prétention N° 7, **caractérisé par le fait que** le fermoir (26') de la soupape de sortie peut bouger par un piston à pression (31) à action pneumatique du dispositif d'entraînement pneumatique (32, 33).

9. Récipient à poudre d'après la prétention N° 7, **caractérisé par le fait que** le fermoir (34) de la soupape de sortie peut bouger par des impulsions par pression cadencées du dispositif d'entraînement pneumatique (37).

10. Récipient à poudre selon l'une des prétentions N^{os} 1 à 9, **caractérisé par le fait que** la chambre de mélange (3, 3') se constitue d'une unité rapportée (19; 29, 30; 36, 38,39) construite séparément et pouvant se fixant au récipient à poudre en commun pour la soupape de sortie et son dispositif d'entraînement (25).

11. Récipient à poudre selon l'une des prétentions N^{os} 1 à 11, **caractérisé par le fait que** l'unité rapportée (36, 38, 39) est vissée à une embase (21') prévue à la soupape de sortie (2) au récipient à poudre.

12. Récipient à poudre d'après la prétention N° 7, **caractérisé par le fait que** le fermoir (26) de la soupape de sortie est précontraint par un ressort à pression (27) vers la position fermée à l'ouverture de sortie (2) du récipient à poudre (1').

13. Récipient à poudre selon l'une des prétentions N^{os} 1 à 11, **caractérisé par le fait que** le fermoir (26') de la soupape de sortie est précontraint par une compensation de pression pneumatique vers la position fermée à l'ouverture de sortie (2) du récipient à poudre (1') qui est maintenu par une conduite annexe (33) du médium de base gazeux passant à la face supérieure du fermoir pour l'adjonction de la poudre, la conduite annexe étant menée à une chambre de compensation de pression (32) qui est constituée d'un espace partiel séparé de la chambre de mélange (3') à la face inférieure du fermoir en face.

14. Récipient à poudre d'après les prétentions N^{os} 1 ou 2, **caractérisé par le fait que** la soupape de sortie est conçue comme un corps caoutchouc élastique (19, 36) qui s'enfiche par un espace principal en forme de pot (20) sur une embase (21, 39) du récipient à poudre (1) et qui donne la chambre de mélange (3, 3') par un espace annexe relié par une ouverture de passage (24, 41), le fermoir de la soupape de sortie étant constitué d'une zone murale contre-dépouillée (23, 34) de la conduite de passage (22, 35) pour le médium de base gazeux et précontraint vers une position fermée en face à l'orifice de sortie (3) du récipient à poudre.

15. Récipient à poudre d'après la prétention N° 14, **caractérisé par le fait qu'**une saillie en forme d'aiguille est constituée en un seul morceau d'une zone murale contre-dépouillée (23) de la conduite de passage (22) et cette saillie est en porte-à-faux dans l'orifice de sortie (2) du récipient à poudre (1) en tant que fermoir (17) de la soupape de sortie au-dessus de l'orifice de passage (24) situé en face.

16. Récipient à poudre d'après la prétention N° 14, **caractérisé par le fait qu'**une membrane prévue comme fermoir de la soupape de sortie est constituée d'une zone murale contre-dépouillée (34) de la conduite de passage (35) et cette membrane est précontrainte vers une position fermée située en face à l'orifice de passage (41) en ligne avec l'orifice de sortie (2) du récipient à poudre.

17. Récipient à poudre d'après les prétentions N^{os} 13 à 16, **caractérisé par le fait que** la zone murale contre-dépouillée (23, 34) de la conduite de passage (22, 35) est alimentée en pression pneumatique transmise par la conduite annexe (33).

18. Conteneur à poudre selon l'une des prétentions N^{os} 9 et 13 à 17 **caractérisé par le fait que** les impulsions de pression cadencées sont transmises à la zone murale contre-dépouillée (4) de la conduite de passage (35) pour le médium de base gazeux.
